# EUROPÄISCHE PATENTANMELDUNG

(11) **EP 4 383 513 A1**
(43) Veröffentlichungstag der Anmeldung: **12.06.2024**
(21) Anmeldenummer: 22211493.6
(22) Anmeldetag: 05.12.2022
(51) Int. Cl.: H02J 7/34, H01G 11/08, H01G 11/10, H01G 11/14, H02J 7/00, H01G 2/14, H01G 11/06, H01M 10/44, H01G 11/16

(54) **ELEKTRISCHES PUFFERSYSTEM MIT DOPPELSCHICHT-KONDENSATOREN**

(71) Anmelder: Siemens Aktiengesellschaft, 80333 München (DE)
(72) Erfinder: Birkmayer, Lukas, 1160 Ottakring (AT); Schweigert, Harald, 1120 Wien (AT)
(74) Vertreter: Siemens Patent Attorneys

(57) **Zusammenfassung**

Die Erfindung betrifft ein elektrisches Puffersystem mit Doppelschicht-Kondensatoren (LC), welche einen vorgegebenen Betriebsspannungsbereich aufweisen, und einer Steuereinrichtung, mittels welcher die Lade- und Entladevorgänge gesteuert werden, dadurch gekennzeichnet, dass in Abhängigkeit von technologischen Belastungsgrenzwerten und Einsatzparametern des Puffersystems Einsatzgrenzwerte festgelegt werden und dass die Steuereinrichtung in der Weise vorbereitet ist, dass die Lade- und Entladevorgänge so gesteuert werden, dass im Betrieb die Einsatzgrenzwerte eingehalten werden.

## Beschreibung

Unabhängig vom grammatikalischen Geschlecht eines bestimmten Begriffes sind im folgenden Text Personen mit männlicher, weiblicher oder anderer Geschlechteridentität mit umfasst.

Die Erfindung betrifft ein elektrisches Puffersystem mit Doppelschicht-Kondensatoren.

Lithium-Ionen-Kondensatoren sind Doppelschichtkondensatoren mit asymmetrischen, d. h. unterschiedlich aufgebauten Elektroden. Sie gehören in die Gruppe der sogenannten Hybridkondensatoren. Ihre elektrische Kapazität setzt sich aus der Serienschaltung einer positiven Elektrode eines herkömmlichen Doppelschichtkondensators mit einer statischen Doppelschichtkapazität und einer zweiten, aus einem Akkumulator stammenden und mit Lithiumionen dotierten negativen Elektrode mit einer zusätzlichen, sehr hohen elektrochemischen Pseudokapazität zusammen.

Die Dotierung der negativen Elektrode bewirkt, dass die Spannungsfestigkeit des Kondensators etwa 3,8 V beträgt. Da die gespeicherte Energie eines Kondensators quadratisch mit der Spannung anwächst, ist die Energiedichte bzw. Speicherfähigkeit von Lithium-Ionen-Kondensatoren mit etwa 3,8 V deutlich höher als die von herkömmlichen Doppelschichtkondensatoren mit 2,5 - 3 V. Zugleich behalten Lithium-Ionen-Kondensatoren die sehr hohe Leistungsdichte von Doppelschichtkondensatoren, besitzen also die Fähigkeit zur schnellen Be- und Entladung gekoppelt mit einer großen Zyklusfestigkeit und langer Lebensdauer, wodurch sie deutliche Vorteile gegenüber Lithium-Ionen-Akkumulatoren aufweisen.

Ihre Eigenschaft der schnellen Lade- und Entladefähigkeit gekoppelt mit einer vergleichsweise hohen Energiedichte macht Lithium-Ionen-Kondensatoren für unterschiedlichste Einsatzbereiche attraktiv.

Nachteilig ist allerdings, dass eine Mindestspannung von 2,2V nicht unterschritten werden darf, sodass aufgrund der Selbstentladung, welche bei geringerer Temperatur als der Raumtemperatur und längeren Lagerzeiten zu einer Schädigung des Lithium-Ionen-Kondensators führen können. Die Kondensatoren entladen sich bei Raumtemperatur nur minimal und können Jahre gelagert werden. Bei geringerer Temperatur ist die Selbstentladung deutlich höher und muss entsprechend berücksichtigt werden.

Der Erfindung liegt daher die Aufgabe zugrunde, das Risiko einer Schädigung durch Unterschreiten der Mindestspannung bei Lagerung zu verringern.

Erfindungsgemäß geschieht dies mit einem elektrischen Puffersystem gemäß Anspruch 1.

Vorteilhafte Ausgestaltungen ergeben sich aus den Unteransprüchen.

Die Erfindung wird anhand von Figuren näher erläutert:
Es zeigen beispielhaft:
Fig. 1 den Spannungsverlauf an Lithium-Ionen-Kondensatoren bei einem Lagervorgang
Fig.2 ein erfindungsgemäßes Puffersystem

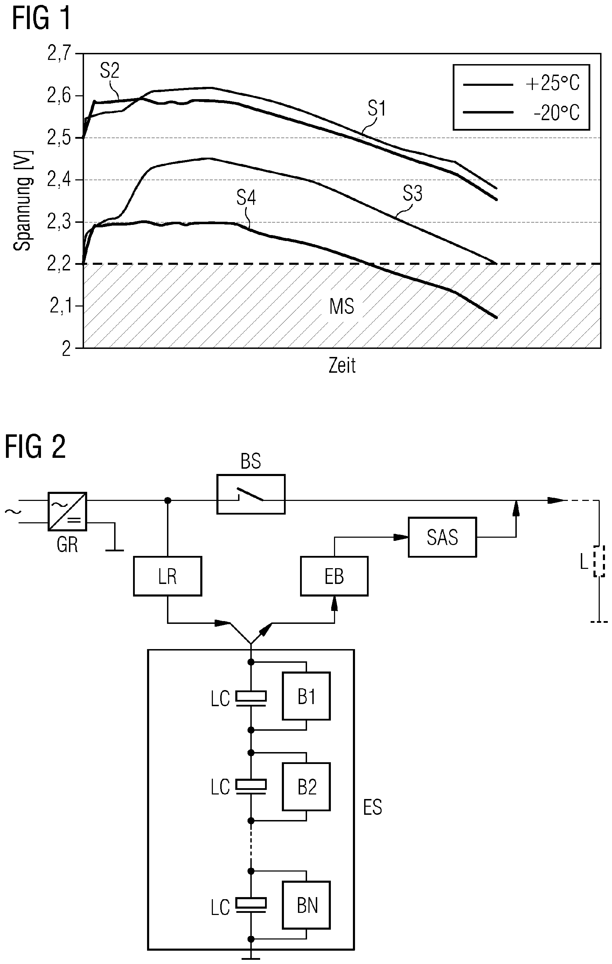

Wie in Fig. 1 dargestellt, kommt es bei einem Lagervorgang von Lithium-Ionen-Kondensatoren zuerst zu einer Spannungserhöhung aufgrund der sogenannten dielektrischen Absorption, d.h. des Effektes, dass ein Dielektrikum in einem elektrischen Feld Relaxationseffekte zeigt.

Der Effekt kann etwa 1 000 bis 3000 Stunden andauern und hängt von der vor dem Lagervorgang angelegten Spannung sowie von der Umgebungstemperatur ab.

Darüber hinaus ist die Selbstaufladung stark von der Lagertemperatur abhängig. Figur 1 zeigt den Spannungsverlauf bei 25°C Lagertemperatur und einer Anfangsspannung von 2,5V in einer ersten Verlaufskurve S1, sowie den Spannungsverlauf bei 25°C Lagertemperatur und einer Anfangsspannung von 2,2 V in einer dritten Verlaufskurve S3, sowie die Verläufe bei -20°C Lagertemperatur und Anfangsspannungen von 2,5 V bzw. 2,2 V in einer zweiten bzw. vierten Verlaufskurve S2, S4.

Um das Risiko einer Zerstörung der Lithium-Ionen-Kondensatoren zu vermeiden, darf die Mindestspannung MS von 2,2 V dabei nicht unterschritten werden.

Erfindungsgemäß werden diese Erkenntnisse über das Verhalten von Doppelschicht-Kondensatoren insbesondere von Lithium-Ionen-Kondensatoren in einem Puffersystem, wie es in Fig.2 dargestellt ist, dazu genutzt, in Abhängigkeit der technologischen Belastungsgrenzwerten wie der Mindestspannung der Lithium-Ionen-Kondensatoren LC und von Einsatzparametern des Puffersystems wie der Temperatur und der Zeitdauer von Lagerzeiten Einsatzgrenzwerte für die einzelnen Lithium-Ionen-Kondensatoren LC und für das gesamte Puffersystem vorgegeben welche so bemessen sind, dass im Betrieb die jeweiligen Einsatzgrenzwerte eingehalten werden und eine Beschädigung oder sogar Zerstörung der Lithium-Ionen-Kondensatoren vermieden wird.

So sind beispielsweise in einem 24 V Puffersystem bei einer typischen Forderung im Pufferfall, d.h. bei Ausfall der Netzversorgung 10 A Laststrom über einen Zeitraum von etwa 2 Minuten aufrechtzuerhalten. Dazu sind 8 in Serie geschaltete Lithium-Ionen-Kondensatoren LC mit einer Kapazität von jeweils 1000F wobei die maximale Spannung der Serienschaltung, die sogenannte Ladeschlussspannung bei 28 V liegt und die Mindestspannung oder Entladeschlussspannung bei 19V liegt.

Das erfindungsgemäße Puffersystem gemäß Fig.2 umfasst einen Gleichrichter GR, einen Bypass-Schalter BS, einen Laderegler LR, einen aus Lithium-Ionen-Kondensatoren LC und Balancerschaltungen B1, B2... BN aufgebauten Energiespeicher ES, sowie einen Entladebegrenzer und ggf. eine optionale Spannungsanpassungsstufe SAS. Am Eingang des Puffersystems liegt eine Wechselspannung an, der Ausgang ist mit einer Last, wie beispielsweise einer Komponente einer industriellen Steuerungsanlage verbunden.

Die Netzspannung am Eingang des Puffersystems wird mittels Gleichrichter GR auf 24V DC umgewandelt. Im Normalbetrieb, d.h. ohne Netzunterbrechung, wird die Last L über den geschlossenen Bypass-Schalter BS versorgt. Währenddessen wird der Energiespeicher ES über der Laderegler LR auf die vorgegebene Ladeschlussspannung geladen. Im Energiespeicher ES sorgen die Balancerschaltungen B1, B2... BN dafür, dass die Einzelspannungen der Lithium-Ionen-Kondensatoren LC nicht auseinanderlaufen. Kommt es zu einem Netzausfall, wird der Bypass-Schalter BS geöffnet und der Energiespeicher ES speist die Last L. Das System puffert so lange, bis die, durch den Entladebegrenzer EB begrenzte Entladeschluss-Spannung erreicht wird.

Gesteuert wird die Funktion der Pufferschaltung durch eine Steuereinrichtung, welche unter anderem neben Laderegler LR und Entladebegrenzer EB auch Mittel zur Erkennung eines Netzausfalls, sowie Mittel zur Ansteuerung des Bypass-Schalters BS und der Balancerschaltungen B1, B2... BN umfasst.

Bei Stromversorgungen für industrielle Steuerungsanlagen sind Stromqualität, Versorgungssicherheit und Energieeffizienz die entscheidenden Anforderungen.

Die zunehmende Einspeisung erneuerbarer Energien in das Netz macht Energiesysteme immer komplexer. Das kann zu Spannungsschwankungen führen, wodurch wiederum Anlagen gestört werden oder sogar ausfallen können. Die Verfügbarkeit von Anlagen und deren Rentabilität zu sichern ist essenziell. Die Lösung sind zuverlässige, anpassungsfähige Puffersysteme, wie sie durch die Erfindung ermöglicht werden.

Kern des beispielhaften Puffersystems ist ein aus in Serie geschalteten Lithium-Ionen-Kondensatoren LC aufgebauter Energiespeicher ES.

Lithium-Ionen Kondensatoren haben produktionsbedingt - wie auch andere Kondensatoren - nicht die exakt gleiche Kapazität, die überdies bei zunehmender Alterung abnimmt. Als Besonderheit kann es außerdem in der frühen Phase der Einsatzzeit zu einem Anstieg der Kapazität kommen, welche bis zu 5-10% gegenüber der Anfangskapazität betragen kann. Darüber hinaus haben Lithium-Ionen-Kondensatoren auch die Eigenschaft, dass die Kapazität während einer Entladung nicht konstant ist, sondern leicht schwankt.

Werden daher fabrikneue Kondensatoren in Serie geschaltet, um höhere Spannungen und damit geringere und effizienter zu verarbeitende Ströme zu erreichen, so wäre es vorteilhaft, ihre Kondensatoreinzelspannung zuvor auf einen einheitlichen Wert zu laden - entweder nahe dem oberen Ende der Arbeitsspannung, nahe dem unteren Ende der Arbeitsspannung oder in der Mitte des erlaubten Spannungsbereichs.

Erfolgt die Ladung aller Lithium-Ionen-Kondensatoren durch Serienschaltung gleichermaßen auf einen bestimmten hohen und einheitlichen Wert, so wird bei der Entladung der Lithium-Ionen-Kondensator mit der geringsten Kapazität als erster die untere Entladegrenzspannung erreichen. Beim anschließenden Wiederaufladen erreichen dann alle Lithium-Ionen-Kondensatoren wieder gleichzeitig den oberen Spannungswert.

Wird hingegen auf einen geringeren Spannungswert der einzelnen Lithium-Ionen-Kondensatoren LC geladen, dann wird beim Ladevorgang der Serienschaltung der Lithium-Ionen-Kondensator mit der geringsten Kapazität schneller in der Spannung steigen und früher die obere vorgebbare Grenzspannung erreichen als die anderen Kondensatoren.

Werden die Kondensatoreinzelspannungen nicht gemessen, so ist eine entsprechende Toleranz der Kapazität und/oder der Kondensator-Einzelspannung zum Zeitpunkt der Verschaltung zu berücksichtigen und eine entsprechend geringere Gesamtspannung für die Reihenschaltung nicht zu übersteigen.

Ist weder die Ausgangskapazität noch das Alterungsverhalten der einzelnen Kondensatoren bekannt, so ist es zweckmäßig, die Kondensatoren auf eine Symmetriespannung in der Mitte des Arbeitsbereichs zu laden.

Ist beispielsweise die vorgegebene maximale Kondensatorspannung bei gleichmäßiger Spannungsaufteilung 3,6V und die vorgegebene minimale Kondensatorspannung bei gleichmäßiger Spannungsaufteilung 2,4 V, so wäre die Differenz dazwischen der Arbeitsbereich 1,2 V und somit die Symmetriespannung zweckmäßigerweise bei 3,0 V.

Es kann zweckmäßig sein, in Abhängigkeit vom Verhältnis aus vorgegebener Mindestlagerzeit im entladenen Zustand und erwartbarer oder bekannter Kapazitätstoleranz von der Symmetriespannung abzuweichen und beispielsweise auf eine etwas höhere Spannung zu laden, sodass ein Maximum an gespeicherter Energie nutzbar gemacht wird, jedoch die beiden ermittelten Grenzspannungen der Kondensatoren, d.h. die Mindestspannung und die maximale Spannung nicht unter- bzw. überschritten werden.

Die Symmetriespannung bzw. die gewünschte Ladespannung kann erreicht werden, indem die Lithium-Ionen-Kondensatoren LC mit einem Ladegerät geladen werden oder die Kondensatoren während des Ladevorgangs über Ausgleichs-Widerstände parallelgeschaltet werden, oder - wie beim Ausführungsbeispiel vorgesehen - eine in der Serienschaltung parallel zu jedem Kondensator verbaute Balancer-Schaltung B1, B2,... Bn den Ladevorgang entsprechend steuert.

Balancer-Schaltungen sind elektronische Komponenten, welche parallel zu einzelnen Kondensatoren geschaltet werden und die Aufgabe haben, die einzelnen Kondensatoren der Serienschaltung gleichmäßig, d.h. auf weitgehend übereinstimmende Einzelspannungen zu laden und zu entladen.

Eine einfache passive Balancer-Schaltung kann mittels paralleler Symmetriewiderstände verwirklicht werden, welche in Abhängigkeit von der anliegenden Spannung ständig Strom aus den Kondensatoren ableiten.

Ist eine Ladeeinheit vorhanden, so wird sie diese Verluste laufend ausgleichen und die Kondensatoren mit höherer Einzelspannung werden stärker entladen als solche mit geringerer Einzelspannung, sodass es zu einer Angleichung der einzelnen Kondensatorspannungen kommt.

Bei Lithium-Ionen-Kondensatoren können derartige Symmetriewiderstände allerdings im Lagerbetrieb zu einer unzulässigen Entladung unter die Mindestspannung MS von etwa 2,2 V und damit zu einer Zerstörung der Lithium-Ionen-Kondensatoren führen.

Wenn also längere Lagervorgänge vorgesehen sind, ist es zweckmäßig, aktive Balancer-Schaltungen einzusetzen. Diese umfassen aktive Halbleiterbauteile, wie hochgenaue Z-Dioden oder Komparatoren mit zuschaltbaren Entladewiderständen, die ebenfalls direkt parallel zu den einzelnen Kondensatoren geschaltet werden. Mit diesen kann die Entladung der Lithium-Ionen-Kondensatoren LC unterhalb eine vorgebbare Spannungsschwelle verhindert und so die Zerstörung vermieden werden.

Dazu ist es aber auch wichtig, die Betriebsversorgung so zu gestalten, dass der Eigenverbrauch der Balancer-Schaltungen nicht zu einer langfristig unkontrollierten Kondensator-Tiefentladung führt.

Eine weitere vorteilhafte Variante sind aktive BalancerSchaltungen mit Ladungsausgleich. Diese Schaltungen entnehmen aktiv Ladung von einem Lithium-Ionen-Kondensator und laden damit einen anderen Lithium-Ionen-Kondensator auf. Diese Schaltungen sind verlustärmer, da Überschussenergie zu einem hohen Prozentsatz in einen anderen Lithium-Ionen-Kondensator umgeladen wird.

Die Entnahme der Ladung von einem Lithium-Ionen-Kondensator kann dabei zweckmäßig mit Hilfe von Schwellspannungen gesteuert werden, mit denen die einzelnen Zellen verglichen werden und eine Energieentnahme dann erfolgt, wenn die Ladespannung einer Zelle eine Schwellspannung erreicht, während andere Zellen der Serienschaltung diese Schwellspannung nicht erreicht haben.

Dabei kann zweckmäßigerweise auch eine Mehrzahl von Schwellspannungen mit unterschiedlichen Werten vorgesehen werden.

Die Steuerung der Energieentnahme kann beispielsweise durch Variieren des Tastverhältnisses eines getakteten Belastungs-Widerstandes oder eines Umladewandlers erfolgen.

Es ist vorteilhaft, wenn während des Betriebes der jeweils aktuelle Kapazitätswert der Lithium Ionen-Kondensatoren zu wiederkehrenden Zeitpunkten bestimmt wird, um so alterungsbedingte Kapazitätsveränderungen zu erkennen und ggf. auch einen Austausch zu veranlassen, wenn die Kapazitätswerte unter einen vorgegebenen Wert fallen.

Diese Kapazitätsbestimmung kann beispielsweise durch gezielte Entladung und Auswertung des Spannungsverlaufes über die Zeit erfolgen.

Dies kann beispielsweise durch Entladung mit einer bestimmten Last zwischen zwei Spannungswerten und Messung der dafür erforderlichen Zeitspanne erfolgen.

Zur Bestimmung der Kapazität des Energiespeichers SE, d.h. der Serienschaltung der Lithium-Ionen-Kondensatoren wird der Energiespeicher in zweckmäßiger Weise vom Laderegler LR getrennt und durch die zu puffernde Last oder über Balancing-Widerstände so um einen bestimmten Spannungswert entlade, sodass eine Kapazitätsbestimmung ermöglicht wird. Die Kapazität lässt sich über den bekannten Zusammenhang Energie [E] = C * (U2² - U1² ) / 2 bestimmen.

Damit die Pufferfähigkeit erhalten bleibt, ist es sinnvoll, die Entladung der Lithium-Ionen-Kondensatoren vergleichsweise gering zur Gesamtladung zu gestalten, um so einerseits den Energieverbrauch für die Kapazitätsbestimmung gering zu halten und andererseits die Pufferfähigkeit auch nach einer Kapazitätsbestimmung zu erhalten.

Es kann aber vorteilhaft sein, die Kapazitätsbestimmung an einem oder mehreren Kondensatoren so zu gestalten, dass die Pufferfähigkeit der Gesamtanalage auch während der Kapazitätsbestimmung vollständig erhalten bleibt. Dazu wird ein einzelner Kondensator oder eine Teilmenge von Kondensatoren der Serienschaltung teilweise entladen, während gleichzeitig die restlichen Kondensatoren entweder über den Laderegler gleichzeitig nachgeladen, oder die Energie aus der Entladung des mindestens einen Kondensators in die verbleibenden Kondensatoren geladen wird. Sollte es jedoch während der Entladung zu einem Pufferfall kommen, so soll kein Kondensator beim Entladen die untere zulässige Spannungsgrenze unterschreiben, oder beim nachfolgenden Wiederaufladen die obere Spannungsgrenze überschreiten. Dies wird dadurch erreicht, dass die Entladung so begrenzt wird, dass jeder Einzelkondensator innerhalb seiner Grenzen betrieben wird.

## Patentansprüche

1. Elektrisches Puffersystem mit Doppelschicht-Kondensatoren, welche einen vorgegebenen Betriebsspannungsbereich aufweisen, und einer Steuereinrichtung (LR, EB), mittels welcher die Lade- und Entladevorgänge gesteuert werden, **dadurch gekennzeichnet, dass** in Abhängigkeit von technologischen Belastungsgrenzwerten und Einsatzparametern des Puffersystems Einsatzgrenzwerte festgelegt werden und dass die Steuereinrichtung (LR, EB)in der Weise vorbereitet ist, dass die Lade- und Entladevorgänge so gesteuert werden, dass im Betrieb die Einsatzgrenzwerte eingehalten werden.

2. Elektrisches Puffersystem mit Doppelschicht-Kondensatoren nach Anspruch 1, **dadurch gekennzeichnet, dass** als Doppelschicht-Kondensatoren in Serie geschaltete Lithium-Ionen-Kondensatoren (LC) vorgesehen sind, dass in Abhängigkeit von individuellen technologischen Belastungsgrenzwerten der Lithium-Ionen-Kondensatoren (LC) und von Einsatzparametern des Puffersystems Einsatzgrenzwerte für die einzelnen Lithium-Ionen-Kondensatoren (LC) und für das gesamte Puffersystem vorgegeben werden und die Steuereinrichtung in der Weise vorbereitet ist, dass die Lade- und Entladevorgänge der einzelnen Lithium-Ionen-Kondensatoren (LC) und des gesamten Puffersystems so gesteuert werden, dass im Betrieb die jeweiligen Einsatzgrenzwerte eingehalten werden.

3. Elektrisches Puffersystem mit Doppelschicht-Kondensatoren nach Anspruch 2, **dadurch gekennzeichnet, dass** als Einsatzparameter des Puffersystems eine Mindest-Lagerzeit und /oder eine Lagertemperatur vorgesehen sind.

4. Elektrisches Puffersystem mit Doppelschicht-Kondensatoren nach Anspruch 2 oder 3, **dadurch gekennzeichnet, dass** als Einsatzparameter Kapazitätstoleranzen der Lithium-Ionen-Kondensatoren (LC) vorgesehen sind.

5. Elektrisches Puffersystem mit Doppelschicht-Kondensatoren nach einem der Ansprüche 2 bis 4, **dadurch gekennzeichnet, dass** die Steuereinrichtung BalancerSchaltungen in der Weise umfasst, dass die in Serie geschalteten Lithium-Ionen-Kondensatoren (LC) gleichmäßig ge- und entladen werden.

6. Elektrisches Puffersystem mit Doppelschicht-Kondensatoren nach Anspruch 5, **dadurch gekennzeichnet, dass** die Balancer-Schaltungen als aktive BalancerSchaltungen ausgeführt sind und aktive Halbleiterbauteile, wie Z-Dioden oder Komparatoren mit zuschaltbaren Entladewiderständen umfassen und parallel zu den einzelnen Lithium-Ionen-Kondensatoren (LC) angeordnet sind.

7. Elektrisches Puffersystem mit DoppelschichtKondensatoren nach einem der Ansprüche 1 bis 5, **dadurch gekennzeichnet, dass** zur Bestimmung der Kapazität der Doppelschicht-Kondensatoren eine gezielte Entladung und Auswertung des Spannungsverlaufes über die Zeit erfolgt.
